# EUROPÄISCHE PATENTSCHRIFT

(11) **EP 1 496 216 B1**
(45) Veröffentlichungstag und Bekanntmachung des Hinweises auf die Patenterteilung: **06.09.2006**
(21) Anmeldenummer: 04015443.7
(22) Anmeldetag: 01.07.2004
(51) Int. Cl.: F02B 67/06, F16H 7/02

(54) **Riementrieb für Hilfsaggregate einer Brennkraftmaschine**
Belt drive for auxiliary drives of an internal combustion engine
Transmission à courroie pour l'entraînement des auxiliaires d'un moteur à combustion interne

(30) Priorität: 08.07.2003 DE 10330672
(43) Veröffentlichungstag der Anmeldung: 12.01.2005
(73) Patentinhaber: Bayerische Motoren Werke Aktiengesellschaft, 80809 München (DE)
(72) Erfinder: Lemberger, Heinz, 85774 Unterföhring (DE); Wimmer, Rudolf, 4431 Haidershofen (AT)

(56) Entgegenhaltungen:
- DE-A- 2 524 668
- DE-A- 10 025 658
- DE-A- 10 159 072
- US-A- 3 863 617

## Beschreibung

Die Erfindung bezieht sich auf einen Riementrieb für Hilfsaggregate einer Brennkraftmaschine, dem ein Reibradgetriebe zugeordnet ist zum Antrieb eines gesondert an der Brennkraftmaschine vorgesehenen Nebenaggregates mit einem Antriebsrad, das mit dem Riemen des Riementriebes unter Zwischenschaltung eines permanent oder gesteuert zuschaltbar angetriebenen Reibrades in Antriebsverbindung steht, wobei das Reibrad mit der Außenseite des Riemens in einem Umschlingungsbereich eines Triebrades der Brennkraftmaschine oder eines Hilfsaggregates reibschlüssig zusammenwirkt.

Ein derartiger Riementrieb wurde z.B. in der noch nicht veröffentlichten deutschen Patentanmeldung 102 55 074 vorgeschlagen mit einem Reibradgetriebe, dessen an einem Schwenkarm geführtes Reibrad mittels eines drehfederbelasteten Exzenters in ständiger bzw. permanenter Antriebsverbindung mit dem Riemen und dem Antriebsrad des Nebenaggregates angeordnet ist. Ein weiterer derartiger Riementrieb wurde femer in der ebenfalls noch nicht veröffentlichten deutschen Patentanmeldung 102 55 075 vorgeschlagen mit einem Reibradgetriebe, bei dem das Reibrad mittels einer mit dem drehfederbelasteten Exzenter zusammenwirkenden Steuereinrichtung bedarfsweise in und außer Eingriff mit dem Riemen oder dem Antriebsrad gesteuert ist.

Wie aus den Zeichnungen zu den Ausführungsbeispielen der vorgenannten Patentanmeldungen erkennbar, ist keinem der Riementriebe eine im Stand der Technik bekannte Schutzabdeckung zugeordnet. Dies führt zu dem Problem, dass der Riemen bei Betrieb der Brennkraftmaschine bei starkem Regen oder einer Wasserdurchfahrt des Fahrzeuges auf seiner mit dem Reibrad zusammenwirkenden Außenseite mit einem Wasserfilm behaftet ist, der zu einem erhöhten Schlupf des Reibrades führt und damit zu einem verschlechterten Antrieb des Nebenaggregates.

Aus der DE 36 31 517 C2 ist eine Schutzverkleidung für ein Zugmittelgetriebe, insbesondere ein Zahnriemengetriebe bekannt, wobei dem Innenraum der Schutzverkleidung ein Luftstrom zugeführt ist zur ständigen Kühlung des Zahnriemens bei gleichzeitig erzeugtem Überdruck, aufgrund dessen ein Eintreten von Fremdkörperchen, Schmutzteilchen und Spritzwasser durch eventuelle Spalte der Schutzverkleidung insbesondere im Anschlussbereich mit dem Gehäuse der Brennkraftmaschine mit Sicherheit vermieden ist. Nachteilig an dieser Anordnung ist der erhöhte Bauaufwand durch ein gesondertes Gebläse oder einer Einrichtung für eine Zuführung von Fahrtwind.

Weiter ist aus der DE 36 41 201 C2 ebenfalls eine Brennkraftmaschine mit einer Schutzverkleidung für ein Zahnriemengetriebe bekannt, wobei in der dicht gekapselten Schutzverkleidung der Zahnriemen über seine Außenseite mit einer Spannrolle zusammenwirkt, die ggf. als Antriebsrad für ein Hilfsaggregat wie z.B. einer Kühlmittel- bzw. Wasserpumpe dienen kann. Nachteilig hierbei ist die unzureichende Kühlung des Zahnriemengetriebes sowie die aufwändige Kapselung durch die Schutzverkleidung.

Der Erfindung liegt die Aufgabe zugrunde, für den gattungsgemäßen Riementrieb eine Schutzvorrichtung anzugeben, mittels der bei einfacher Gestaltung und einwandfreier Kühlung des Riementriebes ein flüssigkeitsfilmbedingter Schlupf des Reibrades insbesondere im Kontaktbereich mit dem Riemen wesentlich reduziert ist.

Diese Aufgabe ist mit dem Patentanspruch 1 dadurch gelöst, dass dem Reibrad in Drehrichtung vor dem Kontaktbereich mit dem Riemen auf dem jeweiligen Triebrad eine die Reibrad-Lauffläche über zumindest einen Umfangsabschnitt abdeckende Schutzvorrichtung zugeordnet ist, die vor einer Beaufschlagung von insbesondere im Umschlingungsbereich des jeweiligen Triebrades von der Riemen-Außenseite abgeschleuderten Partikeln und Flüssigkeitsteilchen schützt, und dass ferner der Einlaufspalt zwischen Reibrad und Riemen auf dem jeweiligen Triebrad mittels einer triebrad- bzw. riemenseitig gerichtet angeordneten Abschereinrichtung an der Schutzvorrichtung im wesentlichen abgedeckt ist, und dass schließlich die Schutzvorrichtung eine reibradseitig offene Aufnahmekammer mit Ablauf für von der Reibrad-Lauffläche durch Zentrifugalkraft abgeschleuderte Flüssigkeitsteilchen umfasst.

Die erfindungsgemäße Schutzabdeckung ist in einer einfachsten Ausgestaltung als ein Abdeckstreifen gestaltet, der dem Einlaufspalt benachbart eine durch eine Abwinkelung gebildete Abschereinrichtung aufweist und der auf der vom Reibrad abgewandten Seite eine eine Aufnahmekammer begrenzende Wanne mit stimseitig angeordneten Öffnungen als Ablauf für eine von der Reibrad-Lauffläche abgeschleuderten Flüssigkeit umfasst.

Mit der Erfindung ist bei vorteilhaft einfacher Gestaltung der Schutzabdeckung und einwandfreier Kühlung des Riementriebes sowie der Stirnseite der Brennkraftmaschine zum einen eine Beaufschlagung des Reibrades insbesondere mit Flüssigkeit, vor allem mit Wasser unterbunden, und zum anderen ist mit der Ableitung des vom Reibrad abgeschleuderten Wassers über die Aufnahmekammer verhindert, dass dieses Wasser wieder in den Kontaktbereich von Reibrad und Riemen sowie erneut auf die Riemen-Außenseite gelangt. Mit der Erfindung ist somit ein flüssigkeitsfilmbedingter Schlupf des Reibrades wesentlich reduziert.

In einer bevorzugten Ausgestaltung der Erfindung ist die Schutzvorrichtung mit der Abschereinrichtung über einen Umfangsabschnitt einer topfförmig gestalteten Abdeckung des Reibrades als integrales Bestandteil ausgebildet. Mit dieser Ausgestaltung ist das vom drehenden Reibrad nahezu insgesamt abgeschleuderte Wasser mittels der Umfangswand der Abdeckung einer reibradseitigen DurchtrittsÖffnung in der Umfangswand einer außenumfänglich an der Abdeckung angeordneten Aufnahmekammer der Schutzvorrichtung zugeführt und über stirnseitig angeordnete Öffnungen der Aufnahmekammer außerhalb des Riementrieb-Bereiches abgeführt. Der Vorteil dieser Ausgestaltung ist bei einer in einem Fahrzeug eingebauten Brennkraftmaschine ein relativ trockener Motorraum, wobei eine nachteilige Wiederbeladung des Riementriebes mit dem schon abgeschleuderten Wasser vermieden ist.

Um die Ausbringung des vom Reibrad entlang der Innenseite der Umfangswand der Abdeckung mitgenommenen Wassers vorteilhaft bei einfacher Gestaltung zu steigern, sind in der Durchtrittsöffnung zur Aufnahmekammer der Schutzvorrichtung in Drehrichtung des Reibrades beabstandet angeordnete Scherwände vorgesehen, die ggf. in Drehrichtung sich der Reibrad-Lauffläche sukzessive nähernd angeordnet sind. Damit kann das mitgenommene Wasser weitestgehend vom Reibrad entfernt werden. Ein hiemach noch auf der Reibrad-Lauffläche verbleibender Wasserfilm lässt sich vorteilhaft dadurch weiter reduzieren, dass die dem Kontaktbereich von Reibrad und Riemen nächst benachbarte Scherwand der Aufnahmekammer mit einer Bürste kombiniert oder mittels einer Bürste gebildet ist.

Auch die Wirkung der den Einlaufspalt zwischen Reibrad und Riemen im wesentlichen abdeckenden Abschereinrichtung lässt sich auf vorteilhafte Weise durch eine Kombination mit einer Bürste oder mittels einer die Abschereinrichtung bildenden Bürste steigern, womit ein auf der Riemen-Außenseite anhaftender Flüssigkeits- bzw. Wasserfilm in Richtung Kontaktbereich von Reibrad und Riemen wesentlich reduziert ist, so dass in weiterer vorteilhafter Weise auch das Reibrad an seiner Lauffläche einen geringeren Wasserfilm aufnehmen kann.

In einer weiteren Ausgestaltung der Erfindung ist die Reibrad-Abdeckung aus einem leichtgewichtigen Werkstoff gebildet mit dem Vorteil einer baulich einfachen Anordnung der Abdeckung auf der Reibrad-Achse oder an einem Führungselement des Reibrades. Als leichtgewichtiger Werkstoff findet bevorzugt ein Kunststoff Verwendung , insbesondere ein spritzgussfähiger Kunststoff zur Ausbildung der Reibrad-Abdeckung als Spritzgussteil. Diese Ausbildung erlaubt es in vorteilhafter Weise, die der Aufnahmekammer vorgeschalteten Scherwände sowie die Abschereinrichtung der Schutzvorrichtung jeweils mittels einer über ein Filmscharnier beweglich angelenkten Leiste sehr eng benachbart der Reibrad-Lauffläche sowie dem Riemen anzuordnen zur jeweils weiteren Steigerung einer Flüssigkeitsableitung. Vorteilhafter Weise sind die Leisten derart ausgebildet und angeordnet, dass eine verschleißbehaftete Berührung der Leisten sowohl mit der Reibrad-Lauffläche als auch mit dem Riemen vermieden ist.

Weiter weist die Reibrad-Abdeckung in der Umfangswand in den Kontaktbereichen des Reibrades mit dem Riemen sowie mit dem Antriebsrad des Nebenaggregates jeweils eine Ausnehmung auf. Zur wirksamen Aussteifung der Reibrad-Abdeckung dient eine an der Stirnseite der Abdeckung im äußeren Randbereich angeordnete, radial über die Umfangswand vorstehende Verstärkung in den Bereichen der Ausnehmungen. Mit dieser Verstärkung ist vorteilhafter Weise auch ein Berührungsschutz für eine Hand erzielt.

Mit der Erfindung zur Reduzierung insbesondere eines flüssigkeitsbedingten Schlupfes des Reibrades kann dessen Anpresskraft an Riemen und Antriebsrad des Nebenaggregates deutlich verringert werden mit dem Vorteil eines geringeren Verschleißes des Reibradtriebes bei trockenem Zustand.

Die Erfindung ist anhand eines bevorzugten, in der Zeichnung dargestellten Ausführungsbeispiels beschrieben. Es zeigt:
- Fig.1: einen lediglich abschnittsweise gezeigten Riementrieb mit einem Reibrad-Getriebe für ein gesondertes Nebenaggregat mit außer Eingriff gesteuertem Reibrad,
- Fig.2: den vorgenannten Riementrieb zur Gänze in perspektivischer Ansicht mit einer erfindungsgemäßen Reibrad-Abdeckung mit integrierter Schutzvorrichtung insbesondere gegen vom Riemen abgeschleudertes Spritzwasser,
- Fig.3: das Reibrad mit Abdeckung in rückseitiger Ansicht, und
- Fig.4: eine Scherwand im Schnitt mit einer über ein Filmscharnier beweglich angelenkten Leiste.

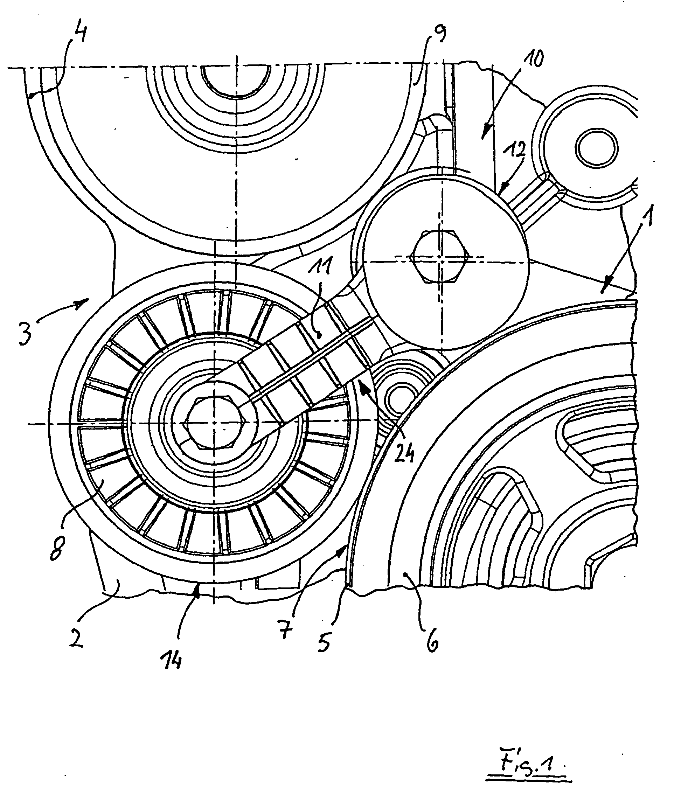

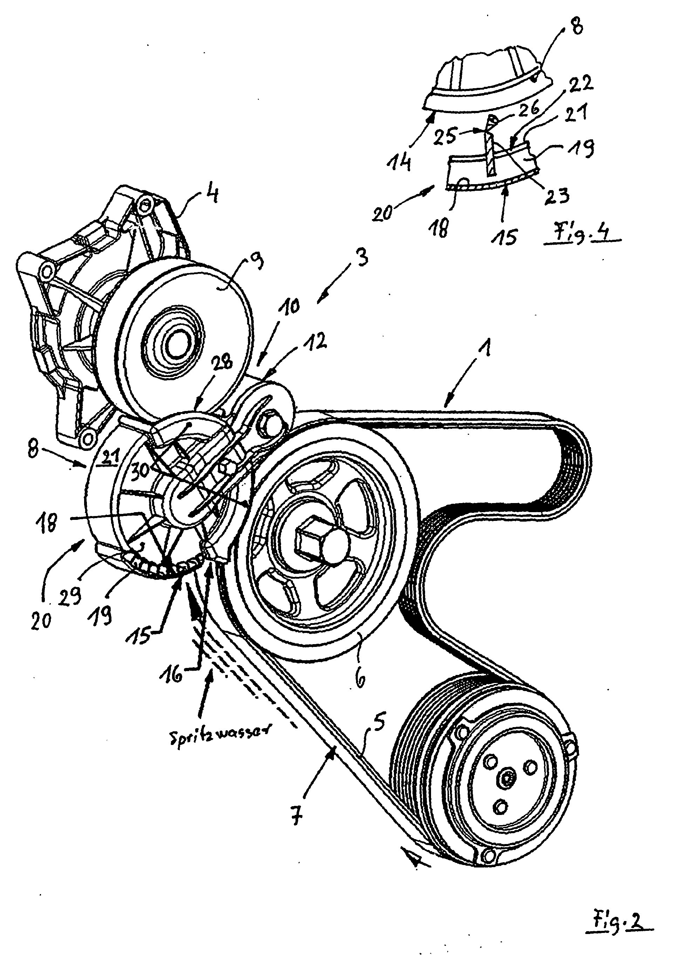

In einem Riementrieb 1 für in Fig.2 angedeutete Hilfsaggregate einer in Fig.1 nur abschnittsweise dargestellten Brennkraftmaschine 2 ist ein Reibradgetriebe 3 vorgesehen für ein gesondert an der Brennkraftmaschine 2 angeordnetes Neben-Aggregat 4, das insbesondere eine Kühlmittelpumpe für den Kühlkreislauf der Brennkraftmaschine ist.

Das ohne den Erfindungsgegenstand gezeigte Reibradgetriebe 3 umfasst ein in einem Umschlingungsbereich des Riemens 5 eines kurbelwellenseitigen Triebrades 6 der Brennkraftmaschine 2 mit der Außenseite 7 des Riemens 5 reibschlüssig zusammenwirkendes Reibrad 8 sowie ein mit dem Reibrad 8 reibschlüssig antreibbares Antriebsrad 9 der Kühlmittelpumpe 4. Das Reibrad 8 ist mittels einer Steuereinrichtung 10 insbesondere bei einem Kaltstart der Brennkraftmaschine 2 außer Eingriff mit dem pumpenseitigen Antriebsrad 9 gesteuert, wobei das Reibrad 8 über einen Schwenkarm 11 mittels eines in einer maschinenseitig fixierten Aufnahme 12 angeordneten, von einer Drehfeder beaufschlagten, nicht gezeigten Exzenter, auf den die Steuereinrichtung 10 einwirkt, für eine Ab- / Zuschaltung der Kühlmittelpumpe 4 gesteuert ist. ( P 102 55 075 )

Aufgrund des Fehlens einer bekannten Schutzvorrichtung für den Riementrieb 1 kann dies im Betrieb der Brennkraftmaschine 2 bei starkem Regen oder einer Wasserdurchfahrt des Fahrzeuges am Riemen 5 auf dessen mit dem Reibrad 8 reibschlüssig zusammenwirkender Außenseite 7 zu einem anhaftenden Wasserfilm führen, der in nachteiliger Weise zu einem erhöhten Schlupf des Reibrades 8 führt und damit zu einem verschlechterten Antrieb des Nebenaggregates 4.

Um bei dem Riementrieb 1 neben einer einwandfreien Kühlung des Riementriebes 1 durch eine Schutzvorrichtung von einfacher Gestaltung einen flüssigkeitsfilmbedingten Schlupf des Reibrades 8 insbesondere im Kontaktbereich mit dem Riemen 5 wesentlich zu reduzieren, wird erfindungsgemäß vorgeschlagen, dass dem Reibrad 8 in Drehrichtung vor dem Kontaktbereich 13 mit dem Riemen 5 auf dem Triebrad 6 eine die Reibrad-Lauffläche 14 über zumindest einen Umfangsabschnitt abdeckende, in einfachster Gestaltung streifenartige Schutzvorrichtung 15 zugeordnet ist, die vor einer Beaufschlagung der Reibrad-Lauffläche 14 von insbesondere im Umschlingungsbereich des Triebrades 6 von der Riemen-Außenseite 7 abgeschleuderten Partikeln und Flüssigkeitsteilchen schützt. Diese Schutzvorrichtung 15 ist weiter mit einer den Einlaufspalt 16 zwischen Reibrad 8 und Riemen 5 auf dem Triebrad 6 mittels einer triebrad- bzw. riemenseitig gerichtet angeordneten Abschereinrichtung 17 ausgerüstet, wobei die den Einlaufspalt 16 im wesentlichen abdeckende Abschereinrichtung 17 auch ein zusätzliches Eindringen von abgeschleudertem Wasser in den Einlaufspalt 16 verhindert. Schließlich ist die Schutzvorrichtung 15 gemäß Patentanspruch 1 mit einer reibradseitig offenen Aufnahmekammer 18 mit einem Ablauf 19 kombiniert zur Aufnahme und Ableitung für von der Reibrad-Lauffläche 14 durch Zentrifugalkraft abgeschleuderte Flüssigkeits- bzw. WasserTeilchen.

Gemäß einer vorteilhaften Weiterbildung ist die vorgenannte Schutzvorrichtung 15 mit der Abschereinrichtung 17 über einen Umfangsabschnitt einer topfförmigen Abdeckung 20 des Reibrades 8 als ein integrales Bestandteil ausgebildet, wobei die Schutzvorrichtung 15 in einer Umfangswand 21 der Abdeckung 20 integriert angeordnet ist mit einer reibradseitig angeordneten Durchtrittsöffnung 22 in der Umfangswand 21 zu einer außenumfänglich vorgesehenen Aufnahmekammer 18, die mit einem stirnseitig angeordneten Ablauf 19 in Form einer oder mehrerer Öffnungen ausgerüstet ist.

Für eine wirkungsvolle Wasserableitung aus der Abdeckung 20 sind in der Durchtrittsöffnung 22 zur Aufnahmekammer 18 der Schutzvorrichtung 15 in Drehrichtung des Reibrades 8 beabstandet angeordnete Scherwände 23 vorgesehen, die ggf. in Drehrichtung sich der Reibrad-Lauffläche 14 sukzessive nähernd ausgebildet sind. Zur Erzielung einer nahezu vollständigen Wasserableitung kann die dem Kontaktbereich 13 von Reibrad 8 und Riemen 5 nächst benachbarte Scherwand 23 mit einer Bürste kombiniert sein. Diese Scherwand 23 kann aber auch durch eine austauschbar gestaltete Bürste ersetzt sein.

Ähnliches gilt für die den Einlaufspalt 16 zwischen Reibrad 8 und Riemen 5 im wesentlichen abdeckende Abschereinrichtung 17 durch eine Kombination mit einer Bürste. Auch hier kann die Abschereinrichtung 17 durch eine austauschbar angeordnete Bürste ersetzt sein.

Vorzugsweise ist die Reibrad-Abdeckung 20 aus einem leichtgewichtigen Werkstoff gebildet. Bevorzugt ist ein Kunststoff gewählt zur Ausbildung der Reibrad-Abdeckung 20 als Spritzgussteil, das den Anforderungen entsprechend steif und trotzdem leicht an Gewicht herstellbar ist. Damit kann die Abdeckung 20 an einem als Schwenkarm 11 für eine Zu-/Abschaltung des Reibrades 8 dienenden Führungselement 24 befestigt werden. Für ein in permanentem Reibeingriff mit dem Riemen 5 und dem Antriebsrad 9 stehendes Reibrad 8 kann die Abdeckung 20 auf bzw. an der Reibrad-Achse fixiert sein.

Die Ausgestaltung der Reibrad-Abdeckung 20 als Kunststoff-Spritzgussteil bietet weiter einen erheblichen Vorteil dadurch, dass die Scherwände 23 und die Abschereinrichtung 17 jeweils mit einer über ein Filmscharnier 25 beweglich angelenkten Leiste 26 ausgebildet werden können zur Erzielung eines minimalen Abstandes zur Reibrad-Lauffläche 14 und zum Riemen 5 für eine gesteigerte Wasserableitung, Fig. 4.

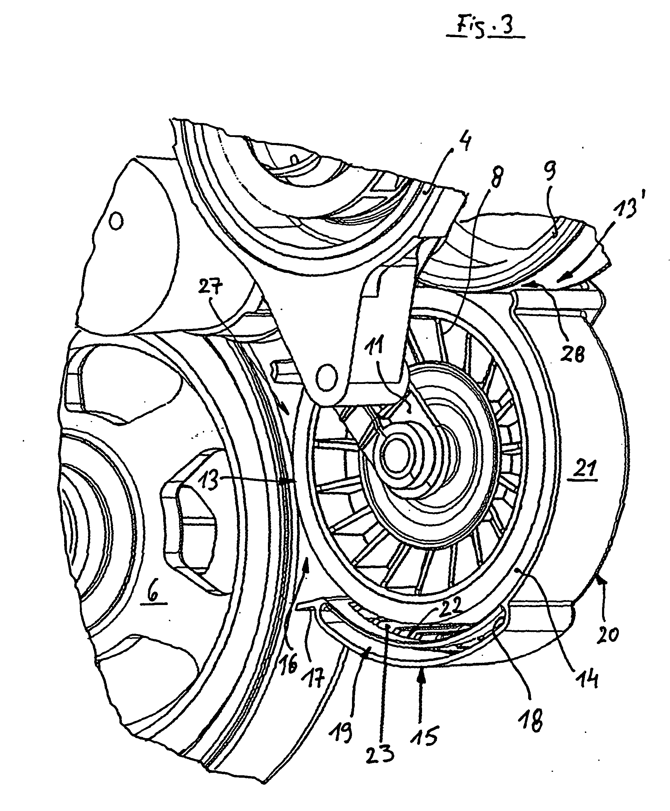

Wie aus den Figuren 2 und 3 ersichtlich, weist die Reibrad-Abdeckung 20 in der Umfangswand 21 in den Kontaktbereichen 13, 13' des Reibrades 8 mit dem Riemen 5 sowie dem Antriebsrad 9 des Nebenaggregates 4 jeweils eine Ausnehmung 27, 28 auf, wobei eine an der Stirnseite 29 der Abdeckung 20 im äußeren Randbereich angeordnete, radial über die Umfangswand 21 vorstehende Verstärkung 30 in den Bereichen der Ausnehmungen 27,28 einer Aussteifung der Reibrad-Abdeckung 20 dient.

Die Abdeckung 20 schützt mit der Verstärkung 30 vor Hand- bzw. Fingerverletzungen.

## Patentansprüche

1. Riementrieb für Hilfsaggregate einer Brennkraftmaschine,
- dem ein Reibradgetriebe (3) zugeordnet ist zum Antrieb eines gesondert an der Brennkraftmaschine (2) vorgesehenen Nebenaggregates (4) mit einem Antriebsrad (9), das
- mit dem Riemen (5) des Riementriebes (1) unter Zwischenschaltung eines permanent oder gesteuert zuschaltbar angetriebenen Reibrades (8) in Antriebsverbindung steht , wobei
- das Reibrad (8) mit der Außenseite (7) des Riemens (5) in einem Umschlingungsbereich eines Triebrades (6) der Brennkraftmaschine (2) oder eines Hilfsaggregates reibschlüssig zusammenwirkt,
**dadurch gekennzeichnet,**
- **dass** dem Reibrad (8) in Drehrichtung vor dem Kontaktbereich (13) mit dem Riemen (5) auf dem jeweiligen Triebrad (6) eine die Reibrad-Lauffläche (14) über zumindest einen Umfangsabschnitt abdeckende Schutzvorrichtung (15) zugeordnet ist, die
- vor einer Beaufschlagung der Reibrad-Lauffläche (14) von insbesondere im Umschlingungsbereich des jeweiligen Triebrades (6) von der Riemen-Außenseite (7) abgeschleuderten Partikeln und Flüssigkeitsteilchen schützt ,
- und **dass** femer der Einlaufspalt (16) zwischen Reibrad (8) und Riemen (5) auf dem jeweiligen Triebrad (6) mittels einer triebrad- bzw. riemenseitig gerichtet angeordneten Abschereinrichtung (17) an der Schutzvorrichtung (15) im wesentlichen abgedeckt ist, und
- **dass** schließlich die Schutzvorrichtung (15) eine reibradseitig offene Aufnahmekammer (18) mit einem Ablauf (19) für von der Reibrad-Lauffläche (14) durch Zentrifugalkraft abgeschleuderte Flüssigkeitsteilchen umfasst.

2. Riementrieb nach Anspruch 1, **dadurch gekennzeichnet,**
- **dass** die Schutzvorrichtung (15) mit der Abschereinrichtung (17) über einen Umfangsabschnitt einer topfförmig gestalteten Abdeckung (20) des Reibrades (8) als integrales Bestandteil ausgebildet ist.

3. Riementrieb nach Anspruch 2, **dadurch gekennzeichnet,**
- **dass** eine Umfangswand (21) der Abdeckung (20) im Bereich der Schutzvorrichtung (15) eine reibradseitige Durchtrittsöffnung (22) zu einer außenumfänglich angeordneten Aufnahmekammer (18) aufweist, die
- mit einer stimseitig angeordneten Ablauf-Öffnung (19) ausgerüstet ist.

4. Riementrieb nach Anspruch 3, **dadurch gekennzeichnet,**
- **dass** in der Durchtrittsöffnung (22) zur Aufnahmekammer (18) der Schutzvorrichtung (15) in Drehrichtung des Reibrades (8) beabstandet angeordnete Scherwände (23) vorgesehen sind , die
- ggf. in Drehrichtung sich der Reibrad-Lauffläche (14) sukzessive nähemd angeordnet sind.

5. Riementrieb nach Anspruch 4, **dadurch gekennzeichnet,**
- **dass** die dem Kontaktbereich (13) von Reibrad (8) und Riemen (5) nächst benachbarte Scherwand (23) mit einer Bürste kombiniert oder mittels einer Bürste gebildet ist.

6. Riementrieb nach den Ansprüchen 1 - 5, **dadurch gekennzeichnet,**
- **dass** die dem Einlaufspalt (16) zwischen Reibrad (8) und Riemen (5) im wesentlichen abdeckende Abschereinrichtung (17) mit einer Bürste kombiniert oder mittels einer Bürste gebildet ist.

7. Riementrieb nach den Ansprüchen 1 - 6, **dadurch gekennzeichnet,**
- **dass** die Reibrad-Abdeckung (20) aus einem leichtgewichtigen Werkstoff, insbesondere einem Kunststoff gebildet ist.

8. Riementrieb nach den Ansprüchen 1 - 7, **dadurch gekennzeichnet,**
- **dass** das Reibrad (8) mittels eines Führungselementes (24) in permanenter oder gesteuert zuschaltbarer Antriebsverbindung angeordnet ist , und
- **dass** die Reibrad-Abdeckung (20) am Führungselement (24) und/oder auf/an der Reibrad-Achse befestigt ist.

9. Riementrieb nach den Ansprüchen 1 - 8, **dadurch gekennzeichnet,**
- **dass** die Reibrad-Abdeckung (20) ein Kunststoff-Spritzgussteil ist, wobei
- ggf. die Scherwände (23) und die Abschereinrichtung (17) jeweils mit einer über ein Filmschamier (25) beweglich angelenkten Leiste (26) ausgebildet sind.

10. Riementrieb nach den Ansprüchen 1 - 9, **dadurch gekennzeichnet,**
- **dass** die Reibrad-Abdeckung (20) in der Umfangswand (21) in den Kontaktbereichen (13 ,13') des Reibrades (8) mit dem Riemen (5) sowie dem Antriebsrad (9) des Nebenaggregates (4) jeweils eine Ausnehmung (27,28) aufweist, wobei
- eine an der Stimseite (29) der Abdeckung (20) im äußeren Randbereich angeordnete, radial über die Umfangswand (21) vorstehende Verstärkung (30) in den Bereichen der Ausnehmungen (27,28) einer Aussteifung der Reibrad-Abdeckung (20) dient.

## Claims

1. A belt drive for auxiliary units of an internal combustion engine,
- associated with a friction wheel drive (3) for driving a sub-unit (4) provided separately on the engine (2) and with a driving wheel (9) which
- is in driving connection with the belt (5) of the belt drive (1) with interposition of a friction wheel (8) driven continuously or switchable in controlled manner, wherein
- the friction wheel (8) frictionally co-operates with the outside (7) of the belt (5) in a looped region of a driving gear (6) of the engine (2) or of an auxiliary unit,
**characterised in that**
- the friction wheel (8) is associated with a protective device (15) covering at least a peripheral portion of the friction-wheel running surface (14) in the direction of rotation before the region of contact (13) with the belt (5) on the respective driving gear (6),
- wherein the device protects the friction-wheel running surface (14) from exposure more especially to particles and liquid particles thrown off the outside (7) of the belt in the looped region round the respective driving gear (6), and
- the inlet gap (16) between the friction wheel (8) and the belt (5) on the respective driving gear (6) is substantially covered by a shearing device (17) on the protective device (15) directed substantially towards the driving gear or the belt, and
- finally the protective device (15) comprises a receiving chamber (18) open on the friction-wheel side and with an outlet (19) for liquid particles thrown by centrifugal force off the friction-wheel running surface (14).

2. A belt drive according to claim 1, **characterised in that**
- the protective device (15) and the shearing device (17) form an integral component over a peripheral portion of a pot-shaped cover (20) of the friction wheel (8).

3. A belt drive according to claim 2, **characterised in that**
- the peripheral wall (21) of the cover (20) has a passage opening (22) on the friction-wheel side in the neighbourhood of the protective device (15) leading to a receiving chamber (18) disposed on the outer periphery and
- formed with a discharge opening (19) on an end face.

4. A belt drive according to claim 3, **characterised in that**
- spaced-apart shearing walls (23) are provided in the passage opening (22) of the receiving chamber (18) of the protective device (15) in the direction of rotation of the friction wheel (8), and
- are disposed successively nearer one another in the direction of rotation of the friction-wheel running surface (14).

5. A belt drive according to claim 4, **characterised in that**
- the shearing wall (23) nearest the contact region (13) between the friction wheel (8) and the belt (5) is combined with a brush or in the form of a brush.

6. A belt drive according to claims 1 - 5, **characterised in that**
- the shearing device (17) substantially covering the inlet gap (16) between the friction wheel (8) and the belt (5) is combined with a brush or in the form of a brush.

7. A belt drive according to claims 1 - 6, **characterised in that**
- the friction-wheel cover (20) is formed of a light-weight material, especially a plastics material.

8. A belt drive according to any of claims 1 to 7, **characterised in that**
- the friction wheel (8), via a guide element (24), is disposed in a continuous or controllably-switchable drive connection, and
- the friction-wheel cover (20) is fastened to the guide element (24) and/or on or to the friction-wheel shaft.

9. A belt drive according to claims 1 - 8, **characterised in that**
- the friction-wheel cover (20) is a plastics material injection-moulded part, wherein
- if required the shearing wall (23) and the shearing device (17) are each formed with a strip (26) pivotable on a film hinge (25).

10. A belt drive according to claims 1 - 9, **characterised in that**
- the friction-wheel cover (20) has recesses (27, 28) in the peripheral wall (21) in the areas of contact (13, 13') of the friction wheel (8) with the belt (5) and with the driving wheel (9) of the sub-unit (4) respectively, wherein
- a reinforcement (30) disposed in the outer edge region on the end face (29) of the cover (20) and projecting radially over the peripheral wall (21) reinforces the friction-wheel cover (20) in the region of the recesses (27, 28).

## Revendications

1. Transmission à courroie pour groupes auxiliaires d'un moteur à combustion interne,
- à laquelle est associé un engrenage à friction (3) pour l'entraînement d'un groupe auxiliaire (4) prévu séparément sur le moteur à combustion interne (2), avec une roue motrice (9), qui
- est en liaison d'entraînement avec la courroie (5) de la transmission à courroie (1) par l'intermédiaire d'une roue de friction (8) entraînée en permanence ou de manière commandée par intermittence,
- la roue de friction (8) coopérant par friction avec la face extérieure (7) de la courroie (5) dans une zone d'enroulement d'une roue motrice (6) du moteur à combustion interne (2) ou d'un groupe auxiliaire,
**caractérisée en ce que**
- dans le sens de rotation en amont de la zone de contact (13) avec la courroie (5) sur la roue motrice (6) concernée, un dispositif de protection (15) recouvre la surface de roulement de la roue de friction (14) au moins sur une partie périphérique est associé à la roue de friction (8), et
- protège la surface de roulement de la roue de friction (14) de la pénétration de particules et de particules de liquide projetées par la face extérieure de la courroie (7), en particulier dans la zone d'enroulement de la roue motrice (6) respective,
- en outre la fente d'entrée (16) entre la roue de friction (8) et la courroie (5) sur la roue motrice (6) respective est pour l'essentiel recouverte au moyen d'une installation de cisaillement (17) disposée sur le dispositif de protection (15) et orientée côté roue motrice ou côté courroie,
- finalement le dispositif de protection (15) comprend une chambre de réception (18) ouverte côté roue de friction avec un écoulement (19) pour des particules de liquide projetées par force centrifuge par la surface de roulement de la roue de friction (14).

2. Transmission à courroie selon la revendication 1,
**caractérisée en ce que**
le dispositif de protection (15) avec l'installation de cisaillement (17) est formé comme composant intégral sur une partie périphérique d'une couverture (20) en forme de pot de la roue de friction (8).

3. Transmission à courroie selon la revendication 2,
**caractérisée en ce qu'**
- une paroi périphérique (21) de la couverture (20) présente, dans la zone du dispositif de protection (15), une ouverture de passage (22) côté roue de friction vers une chambre de réception (18) disposée à la périphérique extérieure, qui
- est munie d'une ouverture d'écoulement (19) côté frontal.

4. Transmission à courroie selon la revendication 3,
**caractérisée en ce que**
- dans l'ouverture de passage (22) vers la chambre de réception (18) du dispositif de protection (15) sont prévues des parois de cisaillement (23) à intervalle dans le sens de rotation de la roue de friction (8), qui
- le cas échéant sont disposées de manière à se rapprocher successivement de la surface de roulement de la roue de friction (14) dans le sens de rotation.

5. Transmission à courroie selon la revendication 4,
**caractérisée en ce que**
la paroi de cisaillement (23) la plus proche de la zone de contact (13) entre la roue de friction (8) et la courroie (5) est combinée avec une brosse ou formée au moyen d'une brosse.

6. Transmission à courroie selon les revendications 1 à 5,
**caractérisée en ce que**
l'installation de cisaillement (17) recouvrant pour l'essentiel la fente d'entrée (16) entre la roue de friction (8) et la courroie (5) est combinée avec une brosse ou formée au moyen d'une brosse.

7. Transmission à courroie selon les revendications 1 à 6,
**caractérisée en ce que**
la couverture de la roue de friction (20) est réalisée à partir d'un matériau léger, en particulier d'une matière plastique.

8. Transmission à courroie selon les revendications 1 à 7,
**caractérisée en ce que**
- la roue de friction (8) est en liaison d'entraînement permanente ou de manière commandée par intermittence par un élément de guidage (24), et
- la couverture de la roue de friction (20) est fixée à l'élément de guidage (24) et/ou sur/à l'axe de la roue de friction.

9. Transmission à courroie selon les revendications 1 à 8,
**caractérisée en ce que**
- la couverture de la roue de friction (20) est une pièce moulée par injection en matière plastique,
- le cas échéant les parois de cisaillement (23) et l'installation de cisaillement (17) sont respectivement formées avec un rail (26) articulé par une charnière pelliculaire (25).

10. Transmission à courroie selon les revendications 1 à 9,
**caractérisée en ce que**
- la couverture de la roue de friction (20) présente des évidements (27, 28) de la paroi périphérique (21) dans les zones de contact (13, 13') de la roue de friction (8) avec la courroie (5) ainsi qu'avec la roue motrice (9) du groupe auxiliaire (4),
- un renforcement (30) sur la face frontale (29) de la couverture (20) dans la zone de bordure extérieure et saillant radialement de la paroi périphérique (21) sert à un raidissement de la couverture de la roue de friction (20) dans les zones des évidements (27, 28).
